# EUROPEAN PATENT SPECIFICATION

(11) **EP 1 901 038 B1**
(45) Date of publication and mention of the grant of the patent: **10.07.2013**
(21) Application number: 06019085.7
(22) Date of filing: 12.09.2006
(51) Int. Cl.: G01C 21/36, G08G 1/0969, G09B 29/10

(54) **Map display system and navigation system**
Kartenanzeigesystem und Navigationssystem
Système d'affichage des cartes et système de navigation

(43) Date of publication of application: 19.03.2008
(73) Proprietor: Alpine Electronics, Inc., Tokyo, 141 (JP)
(72) Inventor: Sofariu, Stefan, c/o Alpine Electronics R&D GmbH, 70567 Stuttgart (DE); Terranova, Sabine, c/o Alpine Electronics R&D, 70567 Stuttgart (DE); Boeer, Tilo, c/o Alpine Electronics R&D, 70567 Stuttgart (DE); Parlic, Novica, c/o Alpine Electronics R&D, 70567 Stuttgart (DE)
(74) Representative: Klunker . Schmitt-Nilson . Hirsch

(56) References cited:
- EP-A2- 1 288 627
- US-B1- 6 392 661

## Description

### Background of the Invention

### Field of the Invention

The present invention is directed to a map display system comprising a display screen adapted to display a map image and a displaying calculating means adapted for providing control signals to the display screen for displaying the map image. The displaying calculating means is adapted for generating different map views having different scales within the map image. Further, the invention is directed to a navigation system comprising such map display system, and more generally to a computer system comprising such map display system. Further, the invention is directed to a method for displaying a map image, according to which different map views having different scales are displayed within the map image. The system and the method can be used particularly for a vehicle navigation system or for a computerized map display system, including for example route guidance function, and road book visualization.

### Description of the Related Art

A commonly known navigation system detects the position of a vehicle generally by using a navigation sensor in the vehicle, a receiver such as a GPS (Global Positioning System) receiver, and map data corresponding to an area surrounding the detected position. For example, the map data are read from a recording medium such as a CD-ROM or a DVD. The navigation system uses a map display system for displaying a map image on a display screen and displaying a mark indicating a current position of the vehicle. As the current position of the vehicle changes with the movement of the vehicle, the vehicle position mark is moved for example along a street displayed on the display screen with the map image, or a map image adjacent to the vehicle is scrolled while the vehicle position mark persists at a predetermined point on the display screen.

In most navigation systems, the map can be displayed in the scale requested by the user. For example, in a first mode a greater scale may be chosen by the user for displaying a greater region on the display screen, whereas in another mode a smaller scale may be chosen by the user for displaying a smaller region on the display screen in greater detail using a higher zoom level. However, when a small display scale is selected for displaying map data in greater detail, only a map of a small area surrounding the vehicle position is displayed in detail on the screen, otherwise there is a risk that the map image gets overcrowded as regards the displayed details. This may, however, result in a map image of only a small area which displays only a small portion of a predetermined guidance route. On the other hand, increasing the map area and scale may result in an overcrowded map view in which it is difficult for the user to differentiate important information from less important information. Particularly, it is difficult for the user to recognize important information at one look.

In JP 2001-336940 A there is disclosed a map display device of a navigation device which comprises a position detecting part for detecting a present position of a vehicle, a map storing part for storing a plurality of map data with different scale, a display part, and a control part. The control part retrieves a wide area map A and a detail map B that include the present position of the vehicle from the map storing part. The wide area map A is displayed on the entire screen of the display part. The detail map B is displayed on the wide area map A in an overlaying manner, wherein the detail map B displays a more detailed view in a greater zoom level of a predetermined peripheral area of the vehicle.

In JP 2000-003497 A a travelling position display device is disclosed having a display screen which is divided into two screens, wherein a detailed map is displayed on the left screen and a wide range map is displayed on the right screen of the display screen. In the left upper corner of both the right and the left screens the respective scale is displayed for information of the user showing a respective ruler for indicating a distance within the respective view. For example, the ruler of the left screen indicates a distance of 200m and the ruler of the right screen indicates a distance of 800m. However, in order to correlate the left and the right screen, the user has to recognize the different scales and rulers of both screens which may have the consequence that the driver may be distracted for quite a long time when trying to recognize this information on the map image.

In EP 1 288 627 A2 there is disclosed an apparatus for projection of navigation data according to which a map is divided in different map views or sections having different scales. An inner map view shows a close-range view having a lower scale showing map data in greater detail, whereas an outer map view has a larger scale. Further, two scale or ruler bars in x- and y-direction are displayed in order for the user to read and capture the scales of the respective map views.

### Summary of the Invention

It is therefore an object of the present invention to improve the operability of a map display system in a way that the user, e. g. a driver of a vehicle, is enabled to recognize map information and different scales from the display screen in an easy way.

In order to solve this object, the invention provides a map display system according to claim 1. Moreover, the invention is directed to a navigation system comprising such map display system according to claim 12, which navigation system may be implemented within a vehicle. Further, the invention is directed to a computer system comprising such map display system according to claim 14. Further, there is provided a method for displaying a map image, the method comprising the steps as specified in claim 15. Embodiments and advantageous features thereof are indicated in the dependent claims.

Particularly, the invention provides a map display system comprising a display screen adapted to display a map image and a displaying calculating means adapted for providing control signals to the display screen for displaying the map image. The displaying calculating means is adapted for generating a first map view having a first scale within the map image, and is adapted for generating a second map view having a second scale within the map image, wherein the first and second scales are different from each other. The displaying calculating means of the invention is further adapted for generating and displaying a common ruler associated with the first and second scale within the map image.

According to the invention, a navigation system using a map display system in accordance with the principles of the invention is improved in its operability. Specifically, the user, e. g. the driver of a vehicle, is enabled to recognize important map information and the associated scale and distances from the display screen in an easy way, wherein the different map views having the different scales displayed within a map image have the same common ruler. The common ruler is associated with the different scales and may indicate different distances within both map views. As a consequence, the driver is enabled to recognize the distances within both map views at one look by recognizing the common ruler, so that this important information of the map image may easily be recognized by the user at one look. This results in an improved map perception.

The map display system according to the invention may be part of a navigation system, e. g. a vehicle navigation system, or may be part of a computer system, such as a PC (personal computer), a mobiie computer such as a notebook, a PDA (personal digital assistant), a mobile telephone, or the like. In the following description and in the claims, the term computer or computer system is used without further explanation as to the above mentioned examples, wherein such computer or computer system described is to comprise all above mentioned types of computers and the like. The map display system according to the invention may be adapted to display route guidance information and/or to display road book information.

According to an embodiment of the invention, the first map view includes at least one first distance indicator, and the second map view includes at least one second distance indicator. Particularly, the displaying calculating means is adapted for generating the common ruler between the first distance indicator and the second distance indicator placed adjacent to one another. This provides the advantage that the user may easily recognize the different scales and distances of the different map views at one look.

According to another embodiment of the invention, the displaying calculating means is adapted to generate the first map view within the second map view sharing a common boundary between the map views, wherein the displaying calculating means is further adapted to generate the ruler adjacent to or on the boundary between the map views. For example, the ruler is displayed on the boundary between the first and second map view, and the first and second distance indicators are placed above and below the common ruler, so that the user may recognize the respective information at one look.

Preferably, the boundary has a particular shape and the ruler is substantially accommodated to the shape of the boundary within the area where it is placed on the map.

According to an embodiment of the invention the map display system further includes means for providing a scale button interacting with the displaying calculating means, wherein upon pressing the scale button the displaying calculating means generates at least one input menu for changing at least one of the scales.

Particularly, the means for providing a scale button is adapted to provide the scale button on the display screen within a touch operating area. Accordingly, the display screen is designed as a touch screen and the means for providing the scale button provide a touch operating area on the touch screen, wherein upon touching the operating area the scale button is deemed to be pressed. According to another embodiment, the scale button may be provided as a key in the peripheral region of the display screen, such as a hardware push button for changing at least one of the scales.

According to another embodiment of the invention the displaying calculating means generates at least one input menu for changing at least one of the scales, the input menu comprising a disc image displayed on the display screen for changing at least one of the scales. Particularly, the display screen is designed as a touch screen and the disc image is adapted for interacting with the user by means of touching the disc image.

Furthermore, according to another embodiment of the invention, means are provided for rotating the disc image by a corresponding action of the user, wherein an associated scale changing is indicated by a rotating movement of the disc image. Thus, similar to a known dial disc of a telephone apparatus, means are provided for changing the scale by a rotating movement of the disc image by touching the respective area on the disc image and by performing a corresponding rotating action of the user similar to a dialling action of a dialling disc.

According to a further embodiment of the invention, the displaying calculating means generates a first input menu for changing the first scale and a second input menu for changing the second scale. Particularly, the first input menu may comprise a first disc image and the second input menu may comprise a second disc image, wherein the first and second disc images are displayed concentrically on the display screen.

According to an embodiment, the first map view is displayed in an inner area of the map image and the second map view is displayed in an outer area of the map image. Here, the first disc image may be arranged as an inner disc image concentrically within the second disc image.

Further advantageous features and embodiments of the invention are evident from the dependent claims.

### Brief description of the drawings

The invention will now be explained in more detail by means of embodiments and accompanying drawings, in which:
- Figure 1: shows a schematic block diagram illustrating an embodiment of a vehicle navigation system;
- Figure 2: shows a map image comprising two map views with different scales and a common ruler in accordance with an embodiment of the invention;
- Figure 3: shows a schematic view depicting the two different views according to Figure 2 and a scale button within a touch operating area of the display screen for adjusting the scale of one or both of the map views;
- Figure 4: shows a schematic view having two disc images as input menus and the scale button displayed on the display screen for changing the scale of the map views;
- Figures 5 to 8: show different map images in the process of operation by the user who changes the scale of the inner map view in accordance with an embodiment of the invention;
- Figure 9: shows a map image comprising an input menu for changing the scale of the inner map view in accordance with another embodiment of the invention.

### Description of Embodiments

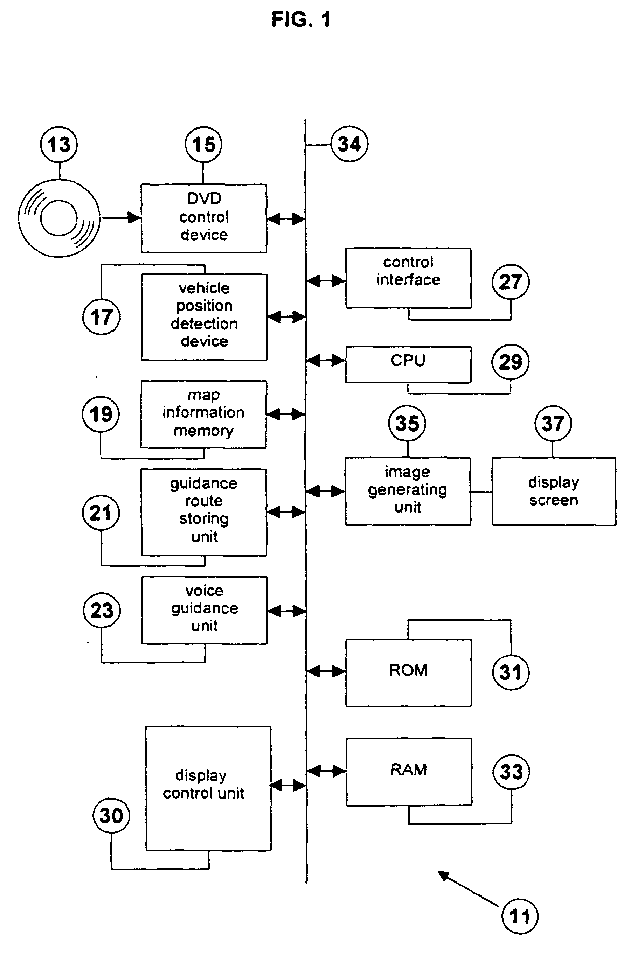

Figure 1 is a schematic block diagram illustrating an implementation of an embodiment of a navigation system 11, which is for example implemented in a vehicle. The navigation system 11 includes a recording medium 13 such as a DVD, ROM or any other memory type suitable for storing map data. The recording medium 13 serves as a map storage medium for storing a digital map. A DVD control device 15 is for reading the predetermined map from the recording medium 13, and a vehicle position detection device 17 is for detecting a vehicle position. The vehicle position detection device 17 has a range sensor for generating a pulse every time the vehicle passes through a predetermined distance, an angle sensor for measuring the driving direction of the vehicle, and a receiving unit such as a global positioning system (GPS) receiving unit. Further, the navigation system 11 includes a map information memory 19 for storing digital map information read from the recording medium 13, a guidance route storing unit 21 for storing information related to the searched guidance or navigation route to the destination predetermined by the user. Optionally, a voice guidance unit 23 for voice guidance to a destination along the calculated route is included in the navigation system 11. A control interface 27 may be used for entering inputs such as a menu selection, map scrolling, search for a route to a destination or the like, which control interface 27 may include, for example, an adjusting knob for rotation movement by the user, or may be implemented in a display unit designed as a touch screen, so that the user may input any commands into the navigation system 11 via touching the respective areas on the screen.

The navigation system 11 further includes a processor (CPU) 29 for controlling the overall operation of the navigation system in interaction with the stored programs and for providing input signals to respective ones of the components, dependent on the respective operation performed by the navigation system. A ROM 31 may be used for storing a guidance route search program or the like, a RAM 33 for storing processed results, an image generating unit 35 for generating a map image based on the map information and guidance route data, and a display screen 37 for displaying the map image. A display control unit 30 is used for generating image control signals for displaying the map image on the display screen 37 in interaction with the image generating unit 35. All of the above mentioned components implemented in the navigation system 11 are connected via a data bus 34 under the control of the CPU 29.

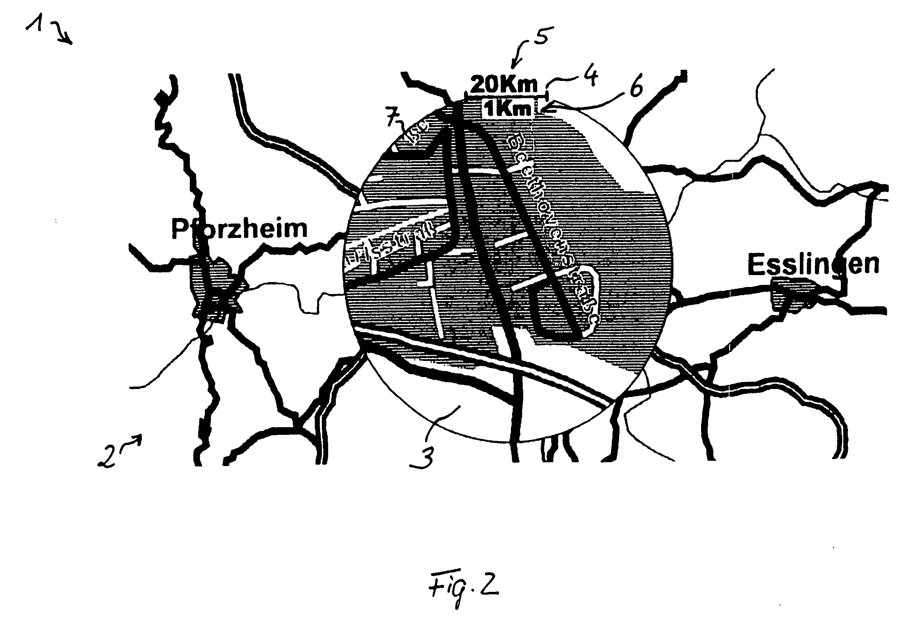

Figure 2 shows a map image 1 comprising two map views 2 and 3 with different scales. Generally, map image 1 shows map information, particularly streets of different function classes such as highways and regional streets, and other map type information such as small towns, rivers etc.. A first, inner map view 3 displays map data in greater detail, i. e. at a greater zoom level than the second, outer map view 2. The map view 3 is displayed in an inner area of the map image 1, whereas the map view 2 is displayed on the entire screen of the display screen 37 shown in Figure 1 in an outer area of the map image. Therefore, according to the shown embodiment of the invention, the map view 3 is generated within the map view 2, wherein map view 3 shows map data in a greater detail, i. e. with a greater zoom level, than outer map view 2. For example, map view 3 may be generated proximate or concentrically around a vehicle position (not shown) if the map display system is used in a navigation system, such as the one explained with reference to Figure 1. Accordingly, the user is provided with detailed map data around his position for searching, for example, alternative routes or for searching particular locations on the map, but nevertheless is provided with an overview according to map image 2 so that the user is enabled to recognize important information regarding important streets and connections between towns, so that the user is enabled to recognize important information at one look.

The split map image 1 according to Figure 2 is provided on a display screen, such as display screen 37 of Figure 1. The CPU 29, the display control unit 30 and the image generating unit 35 commonly referred to as displaying calculating means, provide control signals to the display screen 37 for displaying the map image, the control signals containing information regarding location of the different map views and the respective scales. In addition to the different map views 2 and 3, a common ruler 4 is generated and displayed which is associated with both, the first and second scale of the inner and the outer map views, respectively. As discussed above, the scales of the map views 2 and 3 are different from each other. In addition to ruler 4, the map view 3 includes a first distance indicator 6 and the map view 2 includes a second distance indicator 5, wherein the ruler 4 is displayed between the indicators 5 and 6 which are placed adjacent to one another. According to the embodiment of Figure 2, the ruler 4 is located on the common boundary 7 of map views 2 and 3, wherein distance indicator 5 is placed above and distance indicator 6 is placed beneath the ruler 4. Accordingly, the ruler 4 indicates different distances in both map views 2 and 3, for example indicates a distance of 1 km in map view 3 and a distance of 20km in the map view 2. Therefore, the user is able to recognize the distances in both map views 2 and 3 in an easy way, so that the user is informed about the different scales at one look for correlating the different map views.

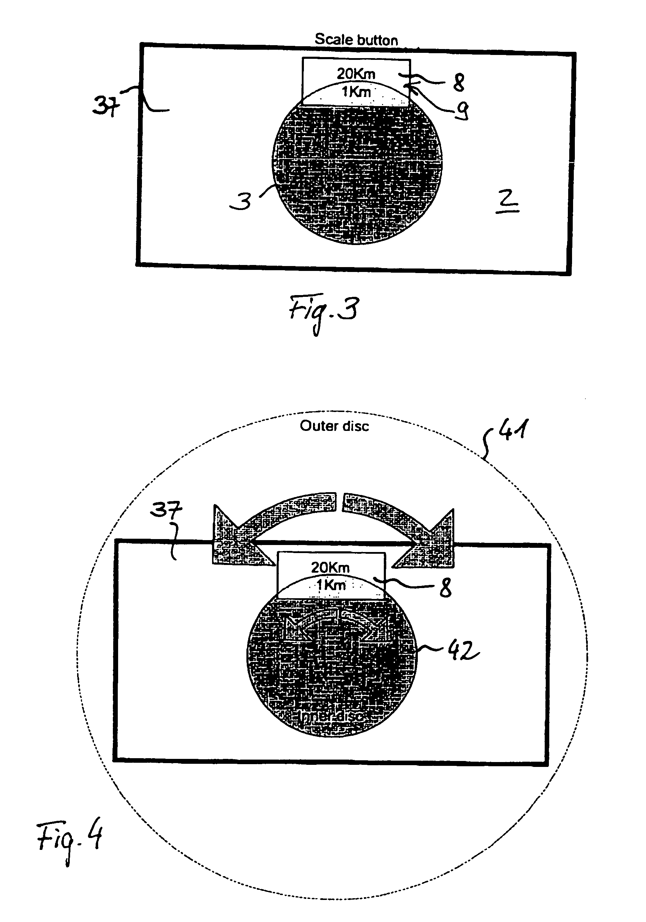

Figure 3 is a schematic view of the display screen 37 depicting schematically the two different views 2 and 3 according to Figure 2 as discussed above. In addition, a scale button 8 within a touch operating area 9 of the display screen 37, which is designed as a touch screen, is provided for adjusting the scale of one or of both of the views 2 and 3. Upon touching or "pushing" the touch operating area 9 of the scale button 8, the control interface 27 according to Figure 1 may interact with the CPU 29, the display control unit 30 and the image generating unit 35 so as to generate an input menu for changing at least one of the scales. As an alternative, a pressure key next to the display screen 37 or a rotating knob may be provided for interfacing with the navigation system for generating an input menu for changing at least one of the scales.

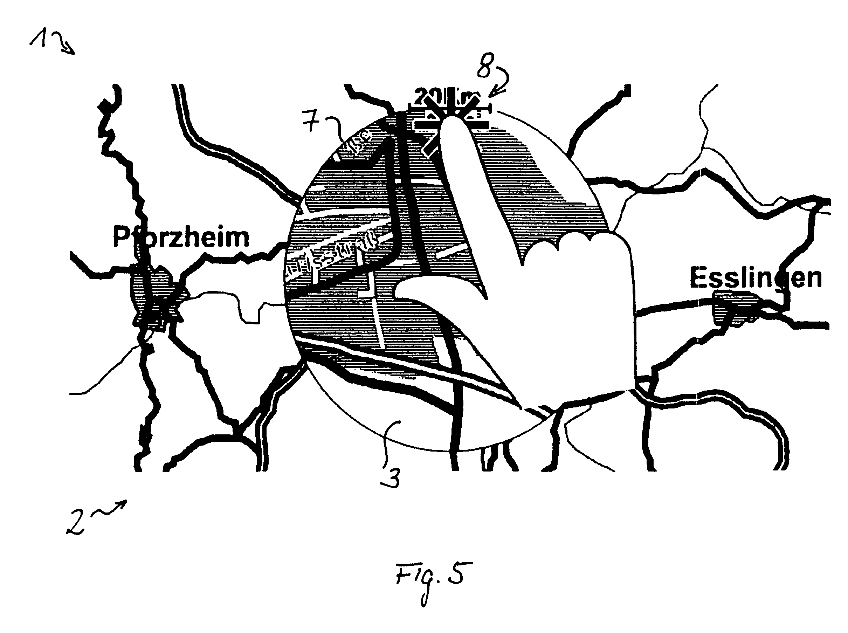

Figure 4 depicts a schematic view showing two disc images 41 and 42 schematically as input menus and the scale button 8 displayed on the display screen 37 for changing the scale of the map views. A first input menu 42 is for changing the scale of the inner map view 3 and a second input menu 41 is for changing the scale of the outer map view 2. The functionality of the input menus 41 and 42 will become apparent in connection with Figures 5 to 8 which show different map images during operation by the user who changes the scale of the inner map view 3 in accordance with an embodiment of the invention.

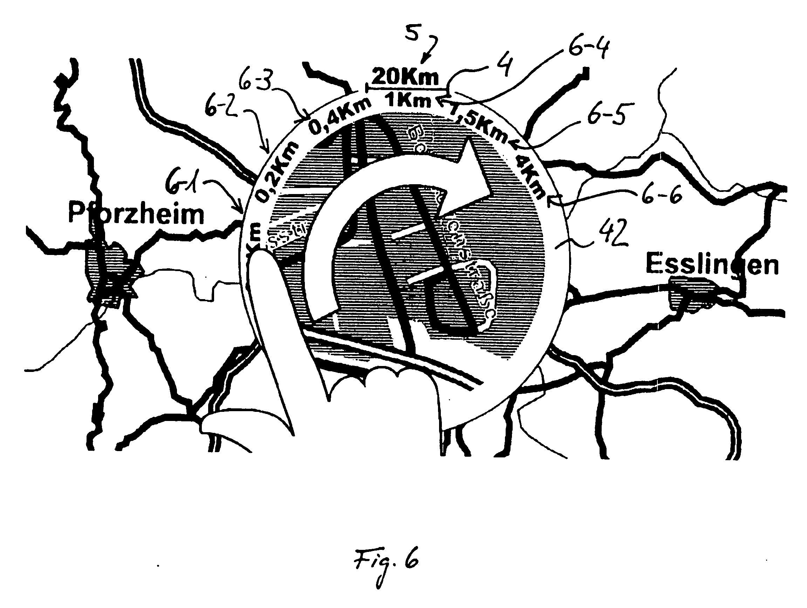

According to Figure 5, the user's hand touches the touch operating area of the scale button 8 as discussed above with reference to Figures 3 and 4. Upon pressing the scale button 8 below the ruler 4, an input menu 42 in the form of a disc is displayed on the display screen (Fig. 6). As an alternative to the scale button 8, two scale buttons may be provided above and below the ruler 4 for entering into a respective input menu for adjusting the respective one of the scales.

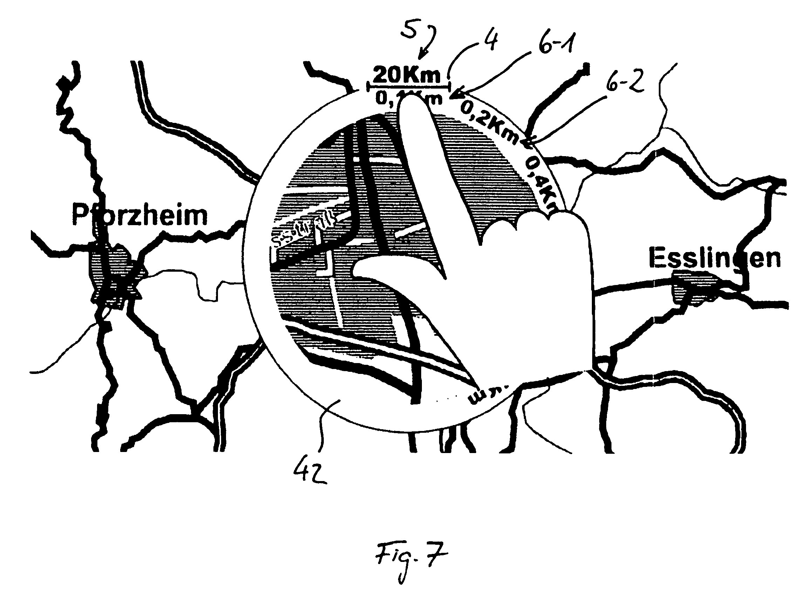

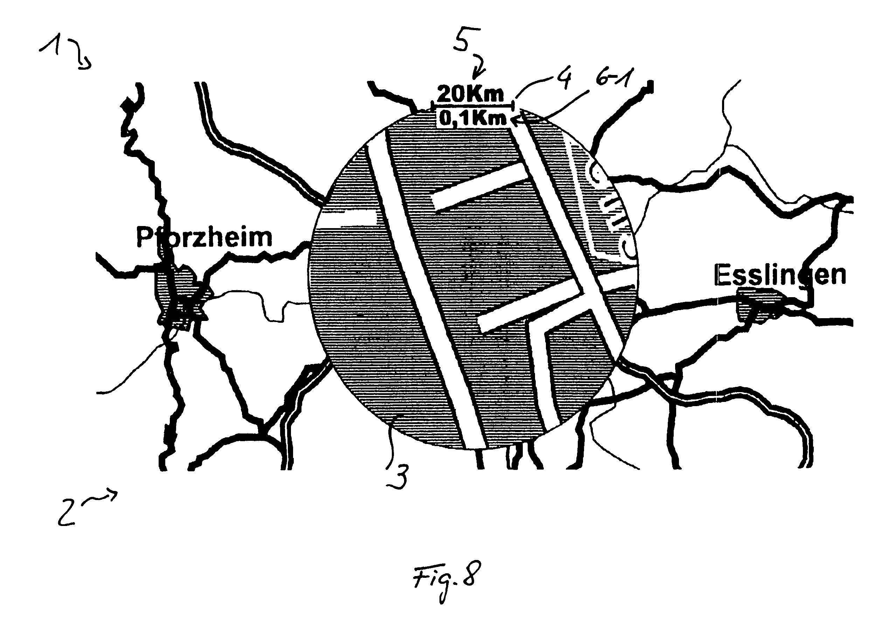

The disc image 42 is adapted for interacting with the user by means of touching the disc image. For example, if the user touches the disc 42 the user may rotate the disc by a rotating movement of his hand on the display screen, so that the scale of the inner map will increase or will decrease depending on the direction of the rotating movement. For example, the disc 42 comprises different distance indicators 6-1 to 6-6. As shown in Figure 7, the user rotates the disc 42 displayed on the display screen in the right direction so that finally distance indicator 6-1 is located beneath the ruler 4, indicating that the scale of the inner map view 3 shall be changed from a distance 1km to 0,1 km. As shown in Figure 8, the zoom level of the inner map view 3 has changed accordingly to a higher level displaying the map data in greater detail.

An analogous operation may be performed with the outer disc image 41 shown in Figure 4 which is displayed concentrically to the inner disc image 42 on the display screen 37. The outer disc image 41 is for changing the scale of the outer map view 2, wherein the different distance indicators (not shown) are displayed next to the common boundary 7 between the map images.

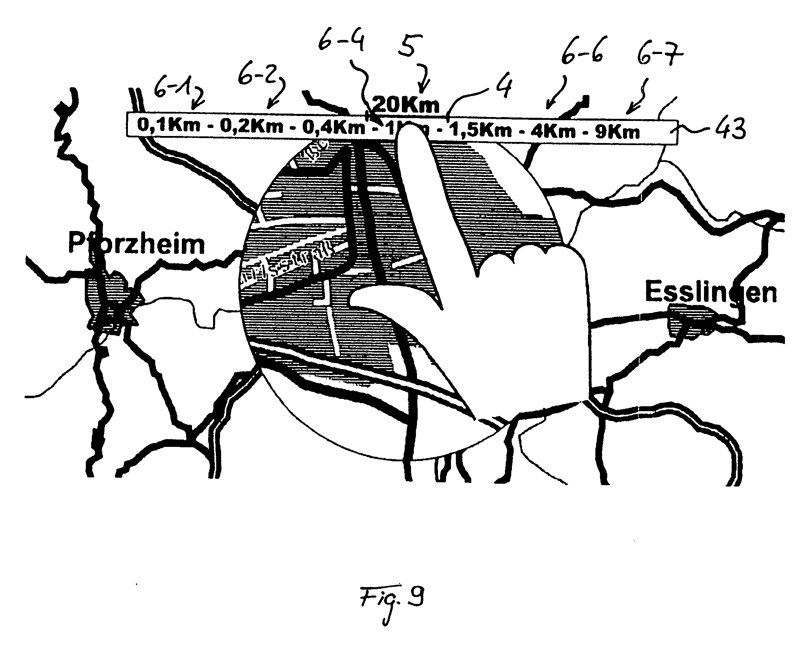

Figure 9 shows a map image comprising an input menu for changing the scale of the inner map view in accordance with another embodiment of the invention. According to this embodiment of the invention, the different distance indicators 6-1 to 6-7 are located on a straight line 43 beneath the ruler 4. By touching the respective distance indicator, an associated scale is adjusted for the respective map view. As an alternative, a respective distance indicator may be touched by the hand of the user and may be pushed into the position beneath the ruler 4 analogously to the rotating movement of a disc image explained above.

## Claims

1. A map display system, comprising
a display screen (37) adapted to display a map image (1),
a displaying calculating means (29, 30, 35) adapted for providing control signals to the display screen for displaying the map image,
the displaying calculating means adapted for generating a first map view (3) having a first scale within the map image,
the displaying calculating means adapted for generating a second map view (2) having a second scale within the map image, wherein the first and second scales are different from each other,
the displaying calculating means adapted for generating and displaying a common ruler (4) associated with the first and second scale within the map image, **characterized in that**
the first map view (3) includes at least one first distance indicator (6) and the second map view (2) includes at least one second distance indicator (5), wherein the displaying calculating means (29, 30, 35) is adapted for generating the ruler (4) between the first distance indicator (6) and the second distance indicator (5) placed adjacent to one another.

2. The map display system according to claim 1, wherein the displaying calculating means (29, 30, 35) is adapted to generate the first map view (3) within the second map view (2) sharing a common boundary (7) and the displaying calculating means is further adapted to generate the ruler (4) adjacent to or on the boundary.

3. The map display system according to claim 2, wherein the boundary (7) has a particular shape and the ruler (4) is substantially accommodated to the shape of the boundary within the area where it is placed on the map.

4. The map display system according to any one of claims 1 to 3, wherein the map display system further includes means (27) for providing a scale button (8) interacting with the displaying calculating means (29, 30, 35), wherein upon pressing the scale button the displaying calculating means generates at least one input menu (41, 42, 43) for changing at least one of the scales.

5. The map display system according to claim 4, wherein the means (27) for providing a scale button (8) is adapted to provide the scale button on the display screen (37) within a touch operating area (9).

6. The map display system according to one of claims 1 to 5, wherein the displaying calculating means (29, 30, 35) generates at least one input menu (41, 42) for changing at least one of the scales, the input menu comprising a disc image (41, 42) displayed on the display screen (37) for changing at least one of the scales.

7. The map display system according to claim 6, wherein the display screen (37) is a touch screen and the disc image (41, 42) is adapted for interacting with the user by means of touching the disc image.

8. The map display system according to claim 6 or 7, wherein means are provided for rotating the disc image (41, 42) by a corresponding action of the user, wherein an associated scale changing is indicated by a rotating movement of the disc image.

9. The map display system according to one of claims 1 to 8, wherein the displaying calculating means (29, 30, 35) generates a first input menu (42) for changing the first scale and a second input menu (41) for changing the second scale.

10. The map display system according to claim 9, wherein the first input menu comprising a first disc image (42) and the second input menu comprising a second disc image (41), the first and second disc images displayed concentrically on the display screen (37).

11. The map display system according to claim 10, wherein the first map view (3) is displayed in an inner area of the map image and the second map view (2) is displayed in an outer area of the map image, the first disc image (42) being arranged as an inner disc image concentrically within the second disc image (41).

12. A navigation system (11) comprising a map display system according to any one of claims 1 to 11.

13. The navigation system of claim 12, wherein the navigation system (11) is implemented within a vehicle.

14. A computer system comprising a map display system according to any one of claims 1 to 11.

15. A method for displaying a map image, the method comprising the steps of:
displaying the map image (1) on a display screen (37),
generating a first map view (3) having a first scale within the map image,
generating a second map view (2) having a second scale within the map image, wherein the first and second scales are different from each other,
generating and displaying a common ruler (4) associated with the first and second scale within the map image, **characterized in that** the first map view (3) includes at least one first distance indicator (6) and the second map view (2) includes at least one second distance indicator (5),
wherein the ruler (4) is generated between the first distance indicator (6) and the second distance indicator (5) placed adjacent to one another.

## Patentansprüche

1. Kartenanzeigesystem, aufweisend:
einen Darstellungsbildschirm (37), der angepasst ist, ein Kartenbild (1) darzustellen,
eine Darstellungsberechnungseinrichtung (29, 30, 35), die angepasst ist, Steuersignale an den Darstellungsbildschirm für die Darstellung des Kartenbilds bereitzustellen,
wobei die Darstellungsberechnungseinrichtung angepasst ist, eine erste Kartenansicht (3) mit einem ersten Maßstab innerhalb des Kartenbilds zu generieren,
wobei die Darstellungsberechnungseinrichtung angepasst ist, eine zweite Kartenansicht (2) mit einem zweiten Maßstab innerhalb des Kartenbilds zu generieren, wobei der erste und zweite Maßstab voneinander unterschiedlich sind,
wobei die Darstellungsberechnungseinrichtung angepasst ist, einen gemeinsamen Zeichenmaßstab (4) zu generieren und darzustellen, der assoziiert ist mit dem ersten und zweiten Maßstab innerhalb des Kartenbilds, **dadurch gekennzeichnet, dass**
die erste Kartenansicht (3) wenigstens eine erste Distanzanzeige (6) und die zweite Kartenansicht (2) wenigstens eine zweite Distanzanzeige (5) beinhalten, wobei die Darstellungsberechnungseinrichtung (29, 30, 35) angepasst ist, den Zeichenmaßstab (4) zwischen der ersten Distanzanzeige (6) und der zweiten Distanzanzeige (5), die nebeneinander angeordnet sind, zu generieren.

2. Kartenanzeigesystem nach Anspruch 1, wobei die Darstellungsberechnungseinrichtung (29, 30, 35) angepasst ist, die erste Kartenansicht (3) innerhalb der zweiten Kartenansicht (2), die eine gemeinsame Abgrenzung (7) teilen, zu generieren, wobei die Darstellungsberechnungseinrichtung weiterhin angepasst ist, den Zeichenmaßstab (4) benachbart zu oder auf der Abgrenzung zu generieren.

3. Kartenanzeigesystem nach Anspruch 2, wobei die Abgrenzung (7) eine bestimmte Form hat und der Zeichenmaßstab (4) im Wesentlichen an die Form der Abgrenzung innerhalb des Bereichs, wo er auf der Karte platziert ist, angepasst ist.

4. Kartenanzeigesystem nach einem der Ansprüche 1 bis 3, wobei das Kartenanzeigesystem weiterhin eine Einrichtung (27) zur Bereitstellung eines Maßstabsknopfs (8) beinhaltet, der mit der Darstellungsberechnungseinrichtung (29, 30, 35) zusammenwirkt, wobei auf ein Drücken des Maßstabsknopfs die Darstellungsberechnungseinrichtung wenigstens ein Eingabemenü (41, 42, 43) zur Veränderung wenigstens eines der Maßstäbe generiert.

5. Kartenanzeigesystem nach Anspruch 4, wobei die Einrichtung (27) zur Bereitstellung eines Maßstabknopfs (8) angepasst ist, den Maßstabknopf auf dem Darstellungsbildschirm (37) innerhalb eines Berührungsbetriebsbereichs (9) bereitzustellen.

6. Kartenanzeigesystem nach einem der Ansprüche 1 bis 5, wobei die Darstellungsberechnungseinrichtung (29, 30, 35) wenigstens ein Eingabemenü (41, 42) zur Veränderung wenigstens eines der Maßstäbe generiert, wobei das Eingabemenü eine Scheibendarstellung (41, 42) aufweist, die auf dem Darstellungsbildschirm (37) zur Veränderung wenigstens eines der Maßstäbe dargestellt wird.

7. Kartenanzeigesystem nach Anspruch 6, wobei der Darstellungsbildschirm (37) ein Berührungsbildschirm ist und die Scheibendarstellung (41, 42) angepasst ist, mit dem Benutzer mittels Berührung der Scheibendarstellung zusammenzuwirken.

8. Kartenanzeigesystem nach Anspruch 6 oder 7, wobei eine Einrichtung zum Rotieren der Scheibendarstellung (41, 42) durch eine korrespondierende Aktion des Benutzers bereitgestellt wird, wobei eine assoziierte Maßstabsänderung durch eine rotierende Bewegung der Scheibendarstellung angezeigt wird.

9. Kartenanzeigesystem nach einem der Ansprüche 1 bis 8, wobei die Darstellungsberechnungseinrichtung (29, 30, 35) ein erstes Eingabemenü (42) zur Veränderung des ersten Maßstabs und ein zweites Eingabemenü (41) zur Veränderung des zweiten Maßstabs generiert.

10. Kartenanzeigesystem nach Anspruch 9, wobei das erste Eingabemenü eine erste Scheibendarstellung (42) und das zweite Eingabemenü eine zweite Scheibendarstellung (41) aufweisen, wobei die erste und zweite Scheibendarstellung konzentrisch auf dem Darstellungsbildschirm (37) dargestellt werden.

11. Kartenanzeigesystem nach Anspruch 10, wobei die erste Kartenansicht (3) in einem inneren Bereich des Kartenbilds dargestellt wird, und die zweite Kartenansicht (2) in einem äußeren Bereich des Kartenbilds dargestellt wird, wobei die erste Scheibendarstellung (42) als eine innere Scheibendarstellung konzentrisch mit der zweiten Scheibendarstellung (41) angeordnet ist.

12. Navigationssystem (11) mit einem Kartenanzeigesystem nach einem der Ansprüche 1 bis 11.

13. Navigationssystem nach Anspruch 12, wobei das Navigationssystem (11) innerhalb eines Fahrzeugs implementiert ist.

14. Computersystem mit einem Kartenanzeigesystem nach einem der Ansprüche 1 bis 11.

15. Verfahren zur Darstellung eines Kartenbilds, wobei das Verfahren die Schritte aufweist:
Darstellung des Kartenbilds (1) auf einem Darstellungsbildschirm (37),
Generieren einer ersten Kartenansicht (3) mit einem ersten Maßstab innerhalb des Kartenbilds,
Generieren einer zweiten Kartenansicht (2) mit einem zweiten Maßstab innerhalb des Kartenbilds, wobei der erste und der zweite Maßstab voneinander unterschiedlich sind,
Generieren und Darstellen eines gemeinsamen Zeichenmaßstabs (4), der mit dem ersten und zweiten Maßstab innerhalb des Kartenbilds assoziiert ist, **dadurch gekennzeichnet, dass** die erste Kartenansicht (3) wenigstens eine erste Distanzanzeige (6) und die zweite Kartenansicht (2) wenigstens eine zweite Distanzanzeige (5) beinhalten,
wobei der Zeichenmaßstab (4) zwischen der ersten Distanzanzeige (6) und der zweiten Distanzanzeige (5), die nebeneinander angeordnet sind, generiert wird.

## Revendications

1. Système d'affichage de carte comprenant :
un écran d'affichage (37) adapté pour afficher une image de carte (1),
un moyen de calcul d'affichage (29, 30, 35) adapté pour fournir des signaux de commande à l'écran d'affichage pour afficher l'image de carte,
le moyen de calcul d'affichage étant adapté pour générer une première vue de carte (3) ayant une première échelle dans l'image de carte,
le moyen de calcul d'affichage étant adapté pour générer une deuxième vue de carte (2) ayant une deuxième échelle dans l'image de carte, dans lequel les première et deuxième échelles sont différentes l'une de l'autre,
le moyen de calcul d'affichage étant adapté pour générer et afficher une ligne graduée commune (4) associée aux première et deuxième échelles dans l'image de carte, **caractérisé en ce que**
la première vue de carte (3) comprend au moins un premier indicateur de distance (6) et la deuxième vue de carte (2) comprend au moins un deuxième indicateur de distance (5), dans lequel le moyen de calcul d'affichage (29, 30, 35) est adapté pour générer la ligne graduée (4) entre le premier indicateur de distance (6) et le deuxième indicateur de distance (5) adjacents l'un par rapport à l'autre.

2. Système d'affichage de carte selon la revendication 1, dans lequel le moyen de calcul d'affichage (29, 30, 35) est adapté pour générer la première vue de carte (3) dans la deuxième vue de carte (2) en partageant une limite commune (7) et le moyen de calcul d'affichage est en outre adapté pour générer la ligne graduée (4) adjacente à la limite ou sur celle-ci.

3. Système d'affichage de carte selon la revendication 2, dans lequel la limite (7) a une forme particulière et la ligne graduée (4) est substantiellement adaptée à la forme de la limite dans la zone où elle est placée sur la carte.

4. Système d'affichage de carte selon l'une quelconque des revendications 1 à 3, dans lequel le système d'affichage de carte comprend en outre un moyen (27) pour fournir un bouton d'échelle (8) interagissant avec le moyen de calcul d'affichage (29, 30, 35), dans lequel après l'actionnement du bouton d'échelle, le moyen de calcul d'affichage génère au moins un menu d'entrée (41, 42, 43) pour changer au moins l'une des échelles.

5. Système d'affichage de carte selon la revendication 4, dans lequel le moyen (27) pour fournir un bouton d'échelle (8) est adapté pour fournir le bouton d'échelle sur l'écran d'affichage (37) dans une zone d'actionnement tactile (9).

6. Système d'affichage de carte selon l'une quelconque des revendications 1 à 5, dans lequel le moyen de calcul d'affichage (29, 30, 35) génère au moins un menu d'entrée (41, 42) pour changer au moins l'une des échelles, le menu d'entrée comprenant une image de disque (41, 42) affichée sur l'écran d'affichage (37) pour changer au moins l'une des échelles.

7. Système d'affichage de carte selon la revendication 6, dans lequel l'écran d'affichage (37) est un écran tactile et l'image de disque (41, 42) est adaptée pour interagir avec l'utilisateur par contact avec l'image de disque.

8. Système d'affichage de carte selon la revendication 6 ou 7, dans lequel des moyens sont prévus pour faire tourner l'image de disque (41, 42) par une action correspondante de l'utilisateur, dans lequel un changement d'échelle associé est indiqué par un mouvement de rotation de l'image de disque.

9. Système d'affichage de carte selon l'une quelconque des revendications 1 à 8, dans lequel le moyen de calcul d'affichage (29, 30, 35) génère un premier menu d'entrée (42) pour changer la première échelle et un deuxième menu d'entrée (41) pour changer la deuxième échelle.

10. Système d'affichage de carte selon la revendication 9, dans lequel le premier menu d'entrée comprenant une première image de disque (42) et le deuxième menu d'entrée comprenant une deuxième image de disque (41), les première et deuxième images de disque étant affichées de façon concentrique sur l'écran d'affichage (37).

11. Système d'affichage de carte selon la revendication 10, dans lequel la première vue de carte (3) est affichée dans une zone intérieure de l'image de carte et la deuxième vue de carte (2) est affichée dans une zone extérieure de l'image de carte, la première image de disque (42) étant agencée sous la forme d'une image de disque intérieure, concentrique avec la deuxième image de disque (41).

12. Système de navigation (11) comprenant un système d'affichage de carte selon l'une quelconque des revendications 1 à 11.

13. Système de navigation selon la revendication 12, dans lequel le système de navigation (11) est mis en oeuvre à l'intérieur d'un véhicule.

14. Système informatique comprenant un système d'affichage de carte selon l'une quelconque des revendications 1 à 11.

15. Procédé d'affichage d'une image de carte, le procédé comprenant les étapes suivantes :
afficher l'image de carte (1) sur un écran d'affichage (37),
générer une première vue de carte (3) ayant une première échelle dans l'image de carte,
générer une deuxième vue de carte (2) ayant une deuxième échelle dans l'image de carte, dans lequel les première et deuxième échelles sont différentes l'une de l'autre,
générer et afficher une ligne graduée commune (4) associée aux première et deuxième échelles dans l'image de carte, **caractérisé en ce que**
la première vue de carte (3) comprend au moins un premier indicateur de distance (6) et la deuxième vue de carte (2) comprend au moins un deuxième indicateur de distance (5),
dans lequel la ligne graduée (4) est générée entre le premier indicateur de distance (6) et le deuxième indicateur de distance (5) adjacents l'un par rapport à l'autre.
